# EUROPEAN PATENT APPLICATION

(11) **EP 2 730 452 A1**
(43) Date of publication of application: **14.05.2014**
(21) Application number: 12290388.3
(22) Date of filing: 13.11.2012
(51) Int. Cl.: B60L 11/18

(54) **A device and a method for inductive charging of a vehicle**

(71) Applicant: Alcatel Lucent, 75007 Paris (FR)
(72) Inventor: Lange, Christian, 10365 Berlin (DE); Noack, Ferenc, 12353 Berlin (DE)
(74) Representative: Kröhnert, Michael

(57) **Abstract**

The invention concerns a device (100) for inductive charging of a vehicle (160) adapted in particular for permanent mounting as part of a road infrastructure (150), comprising an inductive charging means (101) and actuating means (102, 105, 108) for moving the inductive charging means (101) relative to a mounting position of the device.

## Description

### Field of the invention.

The invention relates to a device and a method for inductive charging of a vehicle.

### Background

The batteries of electrical vehicles are charged for example inductively while the vehicle is parked in a parking lot on the pavement. To that end, a first inductive coil typically is embedded into the pavement and the vehicle comprises a second inductive coil. To effectively charge the electric vehicle, it is required to align the first inductive coil and the second inductive coil so that an electromagnetic field generated by the first inductive coil penetrates the second inductive coil. For the driver of an electric vehicle, it is cumbersome and difficult to place the vehicle on the pavement in the right spot for the best alignment of the first inductive coil and the second inductive coil.

### Summary

The object of the invention is thus to facilitate the inductive charging process.

The main idea of the invention is a device for inductive charging of a vehicle adapted for permanent mounting as part of a road infrastructure comprising of an inductive charging means and actuating means for moving the inductive charging means relative to a mounting position of the device. This way, the best alignment of the inductive charging means to the vehicle to be charged is reachable without the intervention of the driver. This increases efficiency of the charging and helps to meet the requirements of the International Commission on Non-Ionizing Radiation Protection ICNIRP regarding the radiation limit values.

Advantageously, the actuating means comprise means for supporting the inductive charging means. This allows compact design of the device.

Advantageously, first actuating means have a rotary plate for rotating the inductive charging means relative to the mounting position. In case the inductive charging means have an asymmetric shape, in particular a non-circular shape, the alignment of the inductive charging means relative to the vehicle may require a rotation of the inductive charging means with respect to the vehicle. The vehicle being parked on the pavement in a fixed position, this means that a rotation of the rotary plate relative to the pavement allows to achieve the best alignment possible for the geometric shape of the inductive charging means used. Likewise, different vehicle set-ups may require different rotation positions for best electromagnetic field penetration of the inductive coils involved in the inductive charging process. This is achievable easily using the rotary plate.

Advantageously, the device comprises a second actuating means for linearly moving the inductive charging means relative to the mounting position. Assuming that the vehicle is parked on the pavement, for example on a parking lot with an essentially linear displacement from the best position relative to the inductive charging means, the second actuating means allow to minimise the linear displacement and hence provide for an easy correction of any linear offset. This way, the best alignment of the inductive charging means and the vehicle is easily achievable without interaction of the driver.

Advantageously, the device comprises a third actuating means for linearly moving the inductive charging means relative to the mounting position wherein the second actuating means and the third actuating means are adapted to move the inductive charging means into different directions. This way, the linear displacement can be corrected in two different directions. This increases the precision of the alignment further.

Advantageously, the actuating means comprise rails and wheels adapted to interact for movement. This is a very simple and precise implementation of the actuating means.

Advantageously, the inductive charging means comprise of a first induction coil adapted to create an, in particular alternating, electromagnetic field for penetrating a suitable second induction coil.

Advantageously, the device comprises housing suitable for permanent mounting as part of the pavement and containing the inductive charging means and the actuating means. This way, the device is easily handled when installing it in a pavement.

Advantageously the device comprises housing encapsulating the inductive charging means and the actuating means. This way a compact design protected from environmental influences is achieved.

Advantageously, the device comprises a drive or controller adapted to operate the actuating means or the inductive charging means. This way, the device is independent from external drive or control means.

Advantageously, one of the actuating means is adapted to support one of the other actuating means. This provides a very compact construction of the device.

Advantageously, the device is adapted to move the inductive charging means to a pre-determined target position. This provides for flexibility in case the position of the vehicle is detected by another device providing the target position to the device.

Advantageously, in a pre-determined target position the first induction coil is aligned to a second induction coil mounted to a vehicle standing on the pavement so that an electromagnetic field emitted by one of the induction coils penetrates the other induction coil. This provides for most efficient energy transfer and reduces the radiation pollution in the environment.

Further developments of the invention can be gathered from independent claims and the following description.

### Brief description of the figures

In the following, the invention will be explained further, making reference to the attached drawings.
Figure 1 schematically shows part of a road infrastructure.
Figure 2 schematically shows part of a road infrastructure.
Figure 3 schematically shows a flow chart.

### Description of the embodiments

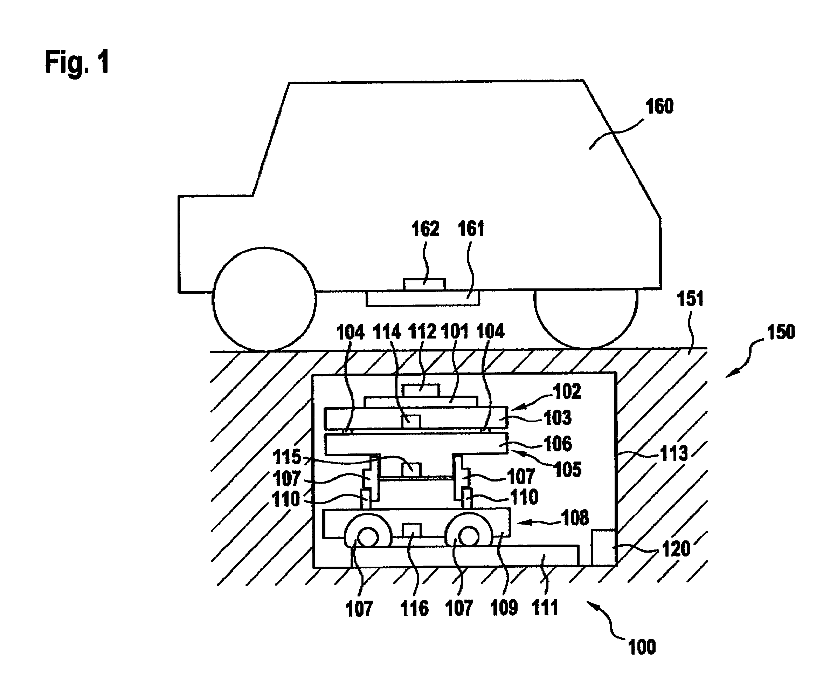

Figure 1 schematically shows part of a road infrastructure comprising a device 100 for inductive charging. According to Figure 1, the device 100 is integrated into the pavement 150. In particular the device 100 is entirely covered by the pavement, with a thin layer of pavement 150 at the surface 151 of the pavement.

The surface 151 according to Figure 1 is adapted to support a vehicle 160. Furthermore, the thin layer of pavement 150 at the surface 151 is adapted to allow the penetration of an electromagnetic field. Alternatively to using pavement as surface 151, any other material suitable to support the vehicle 160 and to allow the penetration of the electromagnetic field, e.g. plastics, may be used. Alternatively the surface 151 may be part of the device 100.

The device 100 comprises inductive charging means 101. The inductive charging means are, for example, a first induction coil.

Furthermore, the device 100 comprises first actuating means 102, in particular a rotary plate 103 mounted rotatable on supports 104. The rotary plate 103 and the supports 104 interact for rotating the inductive charging means 101. The supports 104 may comprise bearings and the rotary plate 103 may be guided to rotate around its centre by a guidance rod. Alternatively to using supports 104, bearings or the guidance rod, the rotary plate 103 may be adapted for rotating the inductive charging means 101 by a system of rails and wheels.

Furthermore, the device 100 comprises a second actuating means 105, for example a cart 106 having wheels 107. Preferably, the second actuating means 105 are adapted for linearly moving the inductive charging means 101. In the example of Figure 1, the second actuating means 105 are adapted to support the first actuating means 102, in particular by receiving or hosting the supports 104. Furthermore the second actuating means 105 are adapted to move the inductive charging means 101 by moving the first actuating means 102 and hence the first inductive charging means 101.

In the example according to Figure 1, the first actuating means 102 are adapted to support the inductive charging means 101. For example, the first induction coil is mounted fixed to the rotary plate 103 for rotating the first induction coil when the rotary plate 103 rotates.

Furthermore, the second actuating means 105 are adapted to linearly move the first induction coil by moving the rotary plate 103 linearly.

The device 100 furthermore comprises a third actuating means 108 having a cart 109 and rails 110. Furthermore, the third actuating means 108 comprise wheels 107.

As depicted in Figure 1, the rails 110 are, for example, mounted on the cart 108 along the two axes carrying the wheels 107 of the cart 108. The rails 110 may be mounted parallel to the two axes at a displacement from the axes as well. This particular alignment means that the rails 110 extend rectangular to the direction of movement of the cart 108 along the wheels 107. Furthermore, the device 100 comprises rails 111 that are mounted in the device 100 to interact with the wheels 107 of the cart 108 for linearly moving the inductive charging means 101 by moving the second actuating means 105 and hence the first actuating means 102. According to the example the linear movements result in rectangular adjustment. Any other angle may be implemented by mounting the rails at an angle as well.

The systems of rails 110, 111 and wheels 107 may be replaced by any other means of movable support, such as sliding planes.

Furthermore, the device 100 according to an example comprises a radio frequency identification antenna 112. The radio frequency identification antenna 112 or several radio frequency identification antennas, is or are preferably mounted at or around the centre of the inductive charging means 101, e.g. the first induction coil. Furthermore, the radio frequency identification antenna 112 is mounted preferably near the side of the device 100 that faces upward towards the surface 151 of the pavement 150 when the device 100 is mounted in the pavement 150.

Furthermore, the device 100 comprises housing 113 suitable for permanent mounting of the device 100 as part of the pavement and containing the inductive charging means 101, the first actuating means 102, the second actuating means 105 and the third actuating means 108. The housing 113 is adapted to allow penetration of the electromagnetic field at the side that faces upward towards the surface 151 when the device 100 is mounted in the pavement 150. Optionally the surface 151 is part of the housing 113. In this case the housing 113 is adapted to support the vehicle 160 in particular when the device 100 is mounted in the pavement 150.

Furthermore, the device 100 may comprise a drive not depicted in figure 1, adapted to operate the actuating means 102, 105, 108. For example, the first actuating means 102 comprises a rotary drive 114 to rotate the rotary plate 103 relative to the second actuating means 105.

Furthermore, in the example the second actuating means 105 comprises a linear drive 115 for linearly moving the second actuating means 105 relative to the third actuating means 108. According to the example, the linear drive 115 is adapted to move the wheels 107 of the cart 106 on the rails 110.

Furthermore, in the example the third actuating means 108 comprises another linear drive 116 for linearly moving the third actuating means 108 relative to the housing 113. For examples, the other linear drive 116 is adapted to move the wheels 107 of the cart 109 of the third actuating means 108 on the rails 111.

Alternatively to comprising the drives, the device 100 may comprise of connections allowing a drive external to the device 100 to interact with the actuating means 102, 105, 108 for movement.

The device 100 further comprises an electrical connector to connect the inductive charging means 101 to a power supply. Optionally the device 100 comprises electrical connectors for the radio frequency identification antenna 112 and for the drives 114, 115, 116 or a controller 120.

Figure 1 depicts the vehicle 160 in a parking position above the surface 151 of the pavement 150. According to the example, the vehicle 160 comprises a second induction coil 161 and at least one radio frequency identification tag 162. Preferably, the at least one radio frequency identification tag 162 is mounted at the centre of the second induction coil 161. As depicted in Figure 1, the second induction coil 161 and the radio frequency identification tag 162 are preferably mounted at the underbody of the vehicle 160 facing downwards towards the surface 151 of the pavement 150 when the vehicle 160 is parked.

Figure 1 depicts a side view of the vehicle 160 and the device 100. In this side view, the alignment of the inductive charging means 101 and hence the first induction coil and the second induction coil 161 is without displacement within the moving direction of the third actuating means 108 in the device 100. As depicted in Figure 1, this is due to a displacement of the third actuating means 108 relative to the centre of the device 100 in the direction of the rails 111.

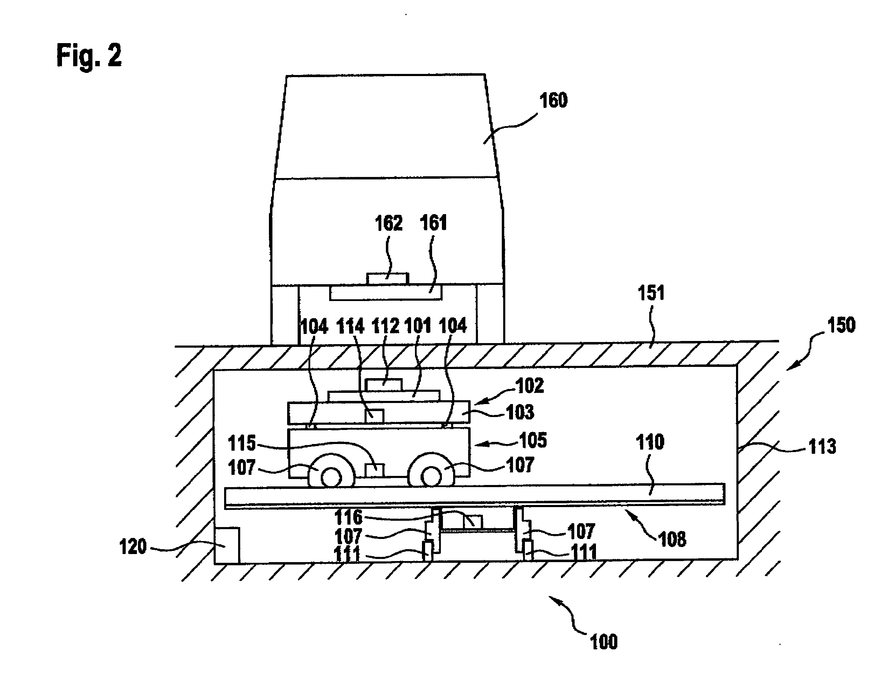

Figure 2 depicts a front view of the vehicle 160 and the device 100. The same reference signs as in Figure 1 are used in Figure 2 for the same parts of the vehicle 160 and the device 100. As depicted in Figure 2, the alignment of the inductive charging means 101 and hence the first induction coil is without displacement from the second induction coil 161. This is due to a displacement of the second actuating means 105 relative to the centre of the device 100 in the direction of the rails 110.

According to the example, circular induction coils are used. Therefore the first actuating means 102 can be in any rotational position regarding the geometrical alignment of the first induction coil with the second induction coil 161. This also means that the use of the first actuating means 102 is optional. In particular, when using circular induction coils, the device 100 may not comprise the first actuating means 102. This will reduce the cost of the device 100. Furthermore depending on the situation at the parking lot, optionally the device 100 may comprise only first actuating means 102, only the second actuating means 105 or only the third actuating means 108. Likewise the device 100 may only comprise the combination of first actuating means 102 with either the second actuating means 105 or the third actuating means 108.

As depicted in Figures 1 and 2, the radio frequency antenna 112 and the radio frequency identification tag 162 are aligned regarding a centre line of the induction coils. This also means that the distance between the radio frequency identification tag 162 and the radio frequency antenna 112 is minimal. According to the example, the minimum displacement between the radio frequency antenna 112 and the radio frequency identification tag 162 is used as an identification of the best alignment.

To this end, the device 100 may comprise the controller 120 that is adapted to determine from the relative position of the radio frequency antenna 112 and the radio frequency identification tag 162, the optimum position of the actuating means 102, 105, 108 with respect to the housing 113. The controller 120 may be external to the device 100. For example the device 100 comprises neither the drives 114, 115, 116 nor the controller 120. The device 100 may comprise also not all of drives 114, 115, 116 or only the controller 120 is external.

Furthermore the radio frequency identification tag 162 and the radio frequency identification antenna 112 are adapted to interact to exchange signals. The radio frequency antenna 112 may be external to the device 100.

For example, the controller 120 is adapted to determine the distance from the radio signal strength of the signal returned by the radio frequency identification tag 162 in response to a suitable request signal sent from the radio frequency identification antenna 112 to the radio frequency identification tag 162. The radio signal strength is, for example, determined from the strength of the received radio signal by the controller 120. To that end, the radio frequency identification antenna 112 is adapted to measure the power of the received signal. Furthermore, the controller 120 is adapted to trigger the sending of the request signal and compare the power of the received signal to a reference value. A pre-determined target position of the inductive charging means 101 is, for example, stored in the device 100 as the reference value for the signal strength of radio signals received from radio frequency identification tags 162 of electric vehicles 160. As the signal strength depends on the properties of the surface 151 of the pavement 150 as well as the mounting position of the radio frequency antenna 112 in the device 100 and the radio frequency identification tag 162 on the vehicle 160, the reference value may vary for different set-ups and may be stored within the device 100 during a calibration of the inductive charging system. Furthermore for each actuating means a different reference value may be stored. This improves the accuracy for movements in different directions. Particularly in case several radio frequency identification tags 162 are used, the different reference values may correspond to the displacement between the mounting positions of the individual radio frequency identification tags 162 and are hence used to indicate the distance from the predetermined target position for individual directions more precisely.

In that case different radio frequency identification tags 162 may be matched to the different mounting positions of the radio frequency identification tag 162 or second induction coil 161 on the vehicle 160 and the setup information may be read from storage in the device 100 after detection of the radio frequency identification of the respective radio frequency identification tag 162. This way the controller 120 can provide the correct setup for the device 100 for different vehicle types.

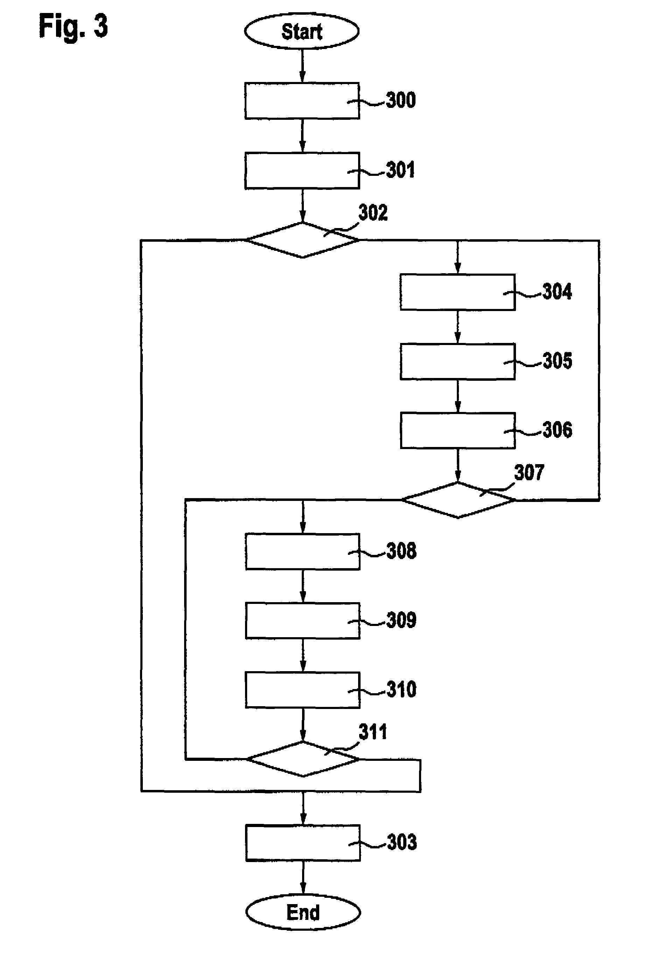

A method for controlling the actuating means 102, 105, 108 of the device 100 is explained making reference to the flowchart of Figure 3.

The pre-determined target position of the inductive charging means 101 is in this example indicated by a pre-determined first reference value and a pre-determined second reference value. The pre-determined second reference value may be the same value as the pre-determined first reference value. This means that the inductive charging means 101 is moved to the predetermined target position by the method described below. In the predetermined target position the first induction coil is aligned to the second induction coil 161 that is mounted to the vehicle 160 standing on the pavement 150 so that an electromagnetic field emitted by one of the induction coils penetrates the other induction coil.

The method, for example, starts whenever the radio frequency identification antenna 112 determines that a radio frequency identification tag 162 is within the range of the radio frequency identification antenna 112. The radio frequency identification antenna 112 is, for example, sending a request signal that penetrates through the surface 151 of the pavement 150 in order to monitor the area above the device 100. After, the start of step 300 is executed.

In the step 300, the strength of the signal received is determined. For example, the power of the received signal is measured and the strength is determined as a value in decibels.

Afterwards, the step 301 is executed. In the step 301, the signal strength is compared to the pre-determined first reference value. For example, the pre-determined first reference value is read from storage and compared to the signal strength. Afterwards, a step 302 is executed.

In step 302 a test is performed to determine if the comparison revealed that the signal strength of the received signal is within a pre-determined tolerance band around the pre-determined first reference value. In case the received signal strength is within the tolerance band around the pre-determined first reference value, a step 303 is executed. Otherwise a step 304 is executed.

In step 303 the inductive charging is initiated. To that end, the inductive charging means 101 is triggered to generate a predetermined electromagnetic field.

Afterwards, the method ends.

Optionally during the charging the signal strength is continuously monitored and the method ends when the signal strength measured leaves aforementioned pre-determined tolerance band around the pre-determined first reference value.

Optionally, the generation of the electromagnetic field is stopped in case the battery of the vehicle 160 is fully charged. This may be detected from information received by the controller 120 from the vehicle 160 via a data link. In that case the controller 120 or the device 100 comprises a data interface not depicted and suitable to receive information about the charging state of the vehicle 160. Furthermore the controller 120 is adapted to stop the charging in case the information received indicates that the battery of the vehicle 160 is fully charged. In this case the method ends for example after the controller 120 detects that the radio frequency identification tag 162 has left the tolerance band as well.

In step 304, the third actuating means 109 is triggered to move towards an arbitrary direction. For example the controller 120 trigger the linear drive 116 to move the cart 108 on the rails 111 from the current position to one of the ends of the rails 111. The direction of movement may be random. In case more than one radio frequency identification tags 162 are used, the direction to move is determined from the comparison of the signal strength to the individual reference values. Afterwards, a step 305 is executed.

In step 305, the radio frequency identification antenna 112 is triggered to send a radio frequency identification request to the radio frequency identification tag 162. Afterwards, a step 306 is executed.

In step 306, the signal strength of the response signal to the request of step 305 is determined. Afterwards, a step 307 is executed.

In step 307, it is determined whether the signal strength is within a pre-determined tolerance band around the pre-determined second reference value. In case the signal strength is within the pre-determined tolerance band, a step 308 is executed, otherwise step 304 is executed.

In step 308, the second actuating means 105 is triggered to move towards an arbitrary direction. For example, the direction is randomly selected or for multiple radio frequency identification tags 162 as described above. For example the controller 120 triggers the linear drive 115 to move the cart 106 from the current position on the rails 110 towards one end of the rails 110. Afterwards, a step 309 is executed.

In step 309, the radio frequency identification antenna 112 is triggered to send a request to the radio frequency identification tag 162 as described in step 305. Afterwards, a step 310 is executed

In step 310, the signal strength of the signal received in response to the request of step 308 is determined. Afterwards, step 311 is executed.

In step 311, it is determined if the signal strength is within the pre-determined tolerance band around the pre-determined first reference value. In case the signal strength is within the tolerance band, the step 303 is executed. Otherwise, step 308 is executed.

The method, for example, ends whenever it is detected that the vehicle 160 is out of the area above the device 100. For example, the radio frequency identification tag 162 is moved out of range of the radio frequency identification antenna 112.

Instead of or additionally to using the pre-determined tolerance band an additional criterion may be used to determine the best position for any of the directions. In case the distance is very far from the pre-determined tolerance band in one direction, this still may be the best reachable position until one or two of the other actuating means are moved. In this case for example the steps 308 to 311 are started despite the fact that the pre-determined tolerance band has not been reached in the steps 304 to 307. In this case for example the steps 304 to 307 are repeated after the steps 308 to 311, before step 303 is executed.

The steps of the method described above may be in any other order. Furthermore, in case the rotational alignment of the charging coils are essential for the inductive charging process, similar steps to the linear alignment steps may be performed by rotating the rotary plate 103 in an arbitrary or random direction until the alignment of the inductive charging coils is sufficiently precise for efficient inductive charging.

Furthermore, instead of using only one radio frequency identification tag 162 in the centre of the second inductive charging coil 161 a plurality of radio frequency identification tags 162 may be used. In this case, the radio frequency identification tags 162 may be mounted with a pre-determined displacement from the centre of the inductive charging coil 161. In this case, furthermore, different reference values may be used in order to determine from the mounting precision of the radio frequency identification tags 162 the orientation of the second inductive charging coil 161 with respect to the device 100. In this case, the mounting positions may be stored as well in the device 100 or the reference values may be selected to ensure that the orientation is detectable unambiguously.

Optionally or alternatively, in case the radio frequency antenna 112 is external to the device 120, the actual position of the first inductive charging means 101 may be determined by the controller 120 by determining the displacement of the actuating means 102, 105, 109 from the centre of the device 100. Furthermore in this case, instead of using the signal strength for comparison to pre-determined target position, i.e. the pre-determined reference value, a target position of the actuating means 102, 105, 109 with respect to the device 100 may be use. For example, the identification of the radio frequency identification tag 162 received may be used to look up the pre-determined target position as value for the displacement from the centre or the rotation angle. The displacement or the angle is for example determined in the calibration for the vehicle 160 considering the mounting positions or shape of the second inductive charging coil 161 and the first inductive charging coil. The displacement may be stored as coordinates of a Cartesian coordinate system with the origin in the centre of the bottom of the device 100. The angles may be stored likewise. In that case the controller 120 is adapted to trigger the drives 114, 115, 116 to move into the correct position.

This way the position of the inductive charging means 101 and hence the first charging coil is adjusted roughly to the respective mounting positions, independently of the parking position of the vehicle 160 on the pavement.

Optionally, in a first step aforementioned rough adjustment may be triggered by the controller 120 whenever a radio frequency identification tag 162 is detected.

The mounting position of the actuating means 102, 105, 108 in the device 100 may be different as the order depicted in figure 1. In particular the first actuating means 102 may be at the bottom of the device 100 or in the middle between the second actuating means 105, and the third actuating means 108.

The embodiment describe above relates to a mounting position of the device 100 in the pavement. In general the device 100 is adapted for permanent mounting as part of a road infrastructure. Pavement is just an example. The mounting position can be at any position relative to a road infrastructure, as long as the electromagnetic field penetrates into the area of the road infrastructure that is accessible by the vehicle 160. The term road infrastructure is not limited to outdoor roads but extends to covered roads and garages such as parking garages as well.

In another embodiment the mounting position is next to a parking lot above the pavement, so that the device 100 is opposite to the front or side of the vehicle 160, when the vehicle 160 is parked on the parking lot. In this case the inductive charging means 101 is arranged in the device 100 to penetrate the area above the pavement of the parking 1ot as well.

In another embodiment the mounting position of the device 100 is above a parking lot, so that the device 100 is under the device 100 when parked on the parking lot. In this case the inductive charging means 101 is arranged in the device 100 to penetrate the area above the pavement of the parking lot as well.

This means that the device 100 adapted in particular for permanent mounting as part of a road infrastructure comprises the inductive charging means 101 and actuating means 102, 105, 108 for moving the inductive charging means 101 relative to a mounting position of the device 100.

Furthermore according to any of the embodiments the device 100 may comprise housing 113 encapsulating the inductive charging means 101 and the actuating means 102, 105, 108. The housing is in this case adapted to protect the device 100 and the parts in the housing from adverse environmental effects.

Preferably the device 100 is adapted so that the first actuating means 102, the second actuating means 105 or the third actuating means 108 or the inductive charging means 101 move inside the housing 113. Preferably any of the actuating mean 102, 105, 108 and the inductive charging means 101 move inside the housing 113 for most of or the whole the distance to the predetermined target position.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

## Claims

1. A device (100) for inductive charging of a vehicle (160), adapted in particular for permanent mounting as part of a road infrastructure (150), comprising an inductive charging means (101) and actuating means (102, 105, 108) for moving (304, 308) the inductive charging means (101) relative to a mounting position of the device (100) .

2. The device (100) according to claim 1, wherein the actuating means (102, 105, 108) comprises means (103, 104) for supporting the inductive charging means (101).

3. The device (100) according to claim 1 or 2, comprising first actuating means (102) having a rotary plate (103) for rotating the inductive charging means (101) relative to the mounting position.

4. The device (100) according to claims 1 to 3, comprising second actuating means (105) for linearly moving (308) the inductive charging means (101) relative to the mounting position.

5. The device (100) according to claims 4, comprising third actuating means (108) for linearly moving (305) the inductive charging means (101) relative to the mounting position, wherein the second actuating means (105) and the third actuating means (108) are adapted to move the inductive charging means (101) into different directions.

6. The device (100) according to claims 5 and 6, wherein the actuating means (105, 108) comprises rails (110, 111) and wheels (107) adapted to interact for movement.

7. The device (100) according to any of the aforementioned claims, wherein the inductive charging means (101) comprise a first induction coil adapted to create an, in particular alternating, electromagnetic field for penetrating a suitable second induction coil (162).

8. The device (100) according to any of the aforementioned claims, comprising housing (113) suitable for permanent mounting as part of the road infrastructure (150) and containing the inductive charging means (101) and the actuating means (102, 105, 108).

9. The device (100) according to any of the aforementioned claims comprising housing encapsulating the inductive charging means (101) and the actuating means (102, 105, 108) .

10. The device (100) according to any of the aforementioned claims, comprising a drive (114, 115, 116) or a controller (120) adapted to operate the actuating means (102, 105, 108) or the inductive charging means (101).

11. The device (100) according to any of the aforementioned claims, wherein the one of the actuating means (102, 105, 108) is adapted to support one of the other actuating means (102, 105, 108).

12. The device (100) according to any of the aforementioned claims, adapted to move the inductive charging means (101) to a predetermined target position.

13. The device (100) according to claim 12, wherein in the predetermined target position the first induction coil is aligned to a second induction coil (162) mounted to the vehicle (160) standing on the pavement (150) so that an electromagnetic field emitted by one of the induction coils penetrates the other induction coil.

14. A method for inductive charging, comprising of moving (304, 308) an inductive charging means (101) of a device (100) in particular adapted for permanent mounting as part of a road infrastructure (150), relative to the mounting position of the device (100) to a predetermined target position.

15. The method according to claim 14, wherein in the predetermined target position, a first induction coil of the inductive charging means (101) is aligned to a second induction coil (161) mounted to the vehicle (160) standing on the pavement of the road infrastructure (150) so that an electromagnetic field emitted by one of the induction coils penetrates the other induction coil.

## Amended claims

### Amended claims in accordance with Rule 137(2) EPC.

**1.** A device (100) for inductive charging of a vehicle (160), **adapted** in particular for permanent mounting as part of a road infrastructure (150), comprising an inductive charging means (101) and actuating means (102, 105, 108) for moving (304, 308) the inductive charging means (101) relative to a mounting position of the device (100), **characterized in that** the device (100) is adapted to move the inductive charging means (101) to a predetermined target position stored in the device (100) as a reference value for the signal strength of radio signals received from radio frequency identification tags (162) of electric vehicles (160), and adapted to compare the power of the received signal to the reference value.

**2.** The device (100) according to claim 1, wherein the actuating means (102, 105, 108) comprises means (103, 104) for supporting the inductive charging means (101).

**3.** The device (100) according to claim 1 or 2, comprising first actuating means (102) having a rotary plate (103) for rotating the inductive charging means (101) relative to the mounting position.

**4.** The device (100) according to claims 1 to 3, comprising second actuating means (105) for linearly moving (308) the inductive charging means (101) relative to the mounting position.

**5.** The device (100) according to claims 4, comprising third actuating means (108) for linearly moving (305) the inductive charging means (101) relative to the mounting position, wherein the second actuating means (105) and the third actuating means (108) are adapted to move the inductive charging means (101) into different directions.

**6.** The device (100) according to claims 5 and 6, wherein the actuating means (105, 108) comprises rails (110, 111) and wheels (107) adapted to interact for movement.

**7.** The device (100) according to any of the aforementioned claims, wherein the inductive charging means (101) comprise a first induction coil adapted to create an, in particular alternating, electromagnetic field for penetrating a suitable second induction coil (162).

**8.** The device (100) according to any of the aforementioned claims, comprising housing (113) suitable for permanent mounting as part of the road infrastructure (150) and containing the inductive charging means (101) and the actuating means (102, 105, 108).

**9.** The device (100) according to any of the aforementioned claims comprising housing encapsulating the inductive charging means (101) and the actuating means (102, 105, 108).

**10.** The device (100) according to any of the aforementioned claims, comprising a drive (114, 115, 116) or a controller (120) adapted to operate the actuating means (102, 105, 108) or the inductive charging means (101).

**11.** The device (100) according to any of the aforementioned claims, wherein the one of the actuating means (102, 105, 108) is adapted to support one of the other actuating means (102, 105, 108).

**12.** The device (100) according to claim 1, wherein in the predetermined target position the first induction coil is aligned to a second induction coil (162) mounted to the vehicle (160) standing on the pavement (150) so that an electromagnetic field emitted by one of the induction coils penetrates the other induction coil.

**13.** A method for inductive charging, comprising of moving (304, 308) an inductive charging means (101) of a device (100) in particular adapted for permanent mounting as part of a road infrastructure (150), relative to the mounting position of the device (100) to a predetermined target position, **characterized in** storing the predetermined target position as a reference value for the signal strength of radio signals received from radio frequency identification tags (162) of electric vehicles (160), and comparing the power of the received signal to the reference value.

**14.** The method according to claim 13, wherein in the predetermined target position, a first induction coil of the inductive charging means (101) is aligned to a second induction coil (161) mounted to the vehicle (160) standing on the pavement of the road infrastructure (150) so that an electromagnetic field emitted by one of the induction coils penetrates the other induction coil.
